# EUROPÄISCHE PATENTSCHRIFT

(11) **EP 3 488 183 B1**
(45) Veröffentlichungstag und Bekanntmachung des Hinweises auf die Patenterteilung: **29.01.2020**
(21) Anmeldenummer: 18723604.7
(22) Anmeldetag: 24.04.2018
(51) Int. Cl.: G01B 11/30, G01N 21/952

(54) **PRÜFVORRICHTUNG UND VERFAHREN ZUM PRÜFEN EINER OBERFLÄCHE WENIGSTENS EINES ROTATIONSSYMMETRISCHEN PRÜFKÖRPERS**
TEST APPARATUS AND METHOD FOR TESTING A SURFACE OF AT LEAST ONE ROTATIONALLY SYMMETRICAL TEST PIECE
DISPOSITIF DE CONTRÔLE ET PROCÉDÉ DESTINÉ À CONTRÔLER UNE SURFACE D'AU MOINS UN CORPS DE CONTRÔLE À SYMÉTRIE DE ROTATION

(30) Priorität: 26.04.2017 DE 102017108868
(43) Veröffentlichungstag der Anmeldung: 29.05.2019
(73) Patentinhaber: confovis GmbH, 07745 Jena (DE)
(72) Erfinder: THIELERT, Frank, 22301 Hamburg (DE)
(74) Vertreter: Steiniger, Carmen
(86) Internationale Anmeldenummer: PCT/IB2018/052854
(87) Internationale Veröffentlichungsnummer: WO 2018/198033

(56) Entgegenhaltungen:
- DE-A1-102005 046 151
- DE-U1-202005 013 876
- US-A1- 2017 030 842
- US-B1- 8 311 312

## Beschreibung

Die vorliegende Erfindung betrifft eine Prüfvorrichtung zum Prüfen einer Oberfläche wenigstens eines rotationssymmetrischen Prüfkörpers, wobei die Prüfvorrichtung wenigstens eine Prüfkörperauflage- und -rotationseinheit, ein 1D- oder 2D-Messsystem zum zweidimensionalen Erfassen der Oberfläche des Prüfkörpers, und ein 2½D- oder 3D-Messsystem zum dreidimensionalen Erfassen eines Bereiches der Oberfläche des Prüfkörpers aufweist.

Die vorliegende Erfindung betrifft ferner ein Verfahren zum Prüfen einer Oberfläche, wie beispielsweise einer Oberfläche, wenigstens eines rotationssymmetrischen Prüfkörpers, wobei der Prüfkörper auf eine Prüferköperauflage- und -rotationseinheit aufgebracht und mit dieser um seine Rotationsachse rotiert wird, und die Oberfläche des Prüfkörpers mit einem 1D- oder 2D-Messsystem zweidimensional und anschließend mit einem 2½D- oder 3D-Messsystem dreidimensional erfasst wird.

Insbesondere bei zylinderförmigen Bauteilen, bei welchen die Funktion der Bauteile durch die Oberflächenstruktur ihrer Oberfläche bestimmt wird, ist eine Prüfung der Oberfläche auf Defekte, wie beispielsweise Schlagstellen, Drehriefen, Kratzer, Druckstellen oder Materialansammlungen, unumgänglich. Speziell bei einer Gleit- oder Wälzbeanspruchung der zylinderförmigen Bauteile darf die Oberfläche keine Fehler bzw. nur minimale Fehler aufweisen. Hierzu ist es erforderlich, jedes Bauteil hinsichtlich Oberflächenfehlern und gegebenenfalls hinsichtlich der jeweiligen Fehlerabmessungen zu untersuchen.

Im Stand der Technik erfolgt die Prüfung von rotationssymmetrischen, speziell zylinderförmigen Bauteilen auf Oberflächenfehler, insbesondere Fehler der Oberfläche des Prüfkörpers, mit einem 1D- oder 2D-Messsystem. Hierbei wird der Prüfkörper während der Erfassung mit dem 1D- oder 2D-Messsystem um seine Rotationsachse gedreht. Der Prüfkörper wird hierfür auf eine Prüfkörperauflage- und -rotationseinheit aufgebracht, mittels welcher der Prüfkörper mindestens um 360° um seine Drehachse drehbar ist. Wird bei der zweidimensionalen Erfassung des Prüfkörpers mit dem 1D- oder 2D-Messsystem ein Defekt detektiert, muss der Defekt hinsichtlich seiner Abmessungen durch Erfassung mit einem 2½D- oder 3D-Messsystem spezifiziert werden, da mittels dem 1D- oder 2D-Messsystem keine Höhenkoordinaten erfasst werden können. Der Transport des Prüfkörpers von dem 1D- oder 2D-Messsystem zu dem 2½D- oder 3D-Messsystem erfolgt im Stand der Technik manuell, das heißt, der Prüfkörper wird von der Prüfkörperauflage- und -rotationseinheit, welche unter bzw. in der Nähe des 1D- oder 2D-Messsystems angeordnet ist, heruntergenommen und auf eine unter bzw. in der Nähe des 2½D- oder 3D-Messsystems angeordnete Prüfkörperauflage- und -rotationseinheit gelegt. Hierbei wird in der Regel die Ausrichtung des Prüfkörpers verändert, sodass der durch das 1D- oder 2D-Messsystem detektierte Defekt nur schwer wiederzufinden ist. Dies ist auch dem geschuldet, dass die Positionsdaten des Defektes im Stand der Technik nicht erfasst werden. Zum erneuten Auffinden des Defektes ist es somit oftmals erforderlich, zumindest einen Teil der Oberfläche des Prüfkörpers erneut hinsichtlich Fehlern zu scannen. Eine derartige Prüfung eines Prüfkörpers ist sehr zeitaufwändig und kostenintensiv.

CN 106 066 333 A und DE 20 2005 013 876 U1 offenbaren beide eine Prüfvorrichtung zum Prüfen einer Oberfläche eines rotationssymmetrischen Prüfkörpers aufweisend ein 2D- und ein 3D-Messsystem.

Es ist daher die Aufgabe der vorliegenden Erfindung, eine Vorrichtung und ein Verfahren bereitzustellen, mittels welcher/m ein Prüfkörper kostengünstig, genau, nachvollziehbar und schnell geprüft werden kann.

Die Aufgabe wird zum einen durch eine Vorrichtung gemäß dem unabhängigen Anspruch 1 gelöst, bei welcher die Prüfkörperauflage- und -rotationseinheit einen ersten, um seine Rotationsachse drehbaren Auflagekörper und einen zweiten, um seine Rotationsachse drehbaren Auflagekörper aufweist, deren Rotationsachsen parallel zueinander angeordnet sind oder sich in einem Punkt schneiden, die eine Auflage für den wenigstens einen Prüfkörper ausbilden und durch welche der wenigstens eine Prüfkörper um seine Rotationsachse rotierbar ist, wenigstens dem erste Auflagekörper ein Winkellagegeber zum Ermitteln eines Drehwinkels des Prüfkörpers auf der Prüfkörperauflage- und -rotationseinheit zugeordnet ist, wenigstens einer der Auflagekörper mit einem Antriebsmotor verbunden ist, die Prüfkörperauflage- und -rotationseinheit auf einer Schlitteneinheit zum Transportieren des Prüfkörpers von dem 1D- oder 2D-Messsystem zu dem 2½D- oder 3D-Messsystem und zurück verfahrbar ist, das 1D- oder 2D-Messsystem eine Messstellenerfassungseinrichtung zum Ermitteln von Positionskoordinaten wenigstens einer Messstelle auf dem Prüfkörper aufweist, das 2½D- oder 3D-Messsystem eine Topographieerfassungseinrichtung aufweist, mit der Topographiedaten der wenigstens einen Messstelle erfassbar sind, und das 1D- oder 2D-Messsystem und das 2½D- oder 3D-Messsystem mit einer gemeinsamen Messstellendatenauswertungseinheit verbunden sind.

Mit der erfindungsgemäßen Vorrichtung lassen sich rotationssymmetrische Prüfkörper, insbesondere Mantelflächen von zylindrischen Prüfkörpern, einfach und schnell hinsichtlich Defekten und/oder Strukturstellen untersuchen. Unter Strukturstellen sind hier gewollte Strukturierungen der Oberfläche eines Prüfkörpers zu verstehen, wohingegen unter Defekten bzw. Fehlern ungewollte Oberflächenunebenheiten, wie beispielsweise Risse, Riefen, Dellen, Materialaufwürfe, Rattermarken, Schmiedemarken und/oder Materialanlagerungen zu verstehen sind. Im Folgenden wird die Prüfung eines Prüfkörpers im Hinblick auf Defekte mittels einer erfindungsgemäßen Vorrichtung beschrieben, was die erfindungsgemäße Vorrichtung jedoch nicht auf die Prüfung eines Prüfkörpers hinsichtlich Defekten einschränken soll.

Erfindungsgemäß wird die Oberfläche des Prüfkörpers zunächst mit dem 1D- oder 2D-Messsystem zweidimensional erfasst, um mögliche Defekte der Oberfläche des Prüfkörpers zu detektieren. Das 1D- oder 2D-Messsystem kann beispielsweise als Kameraeinrichtung ausgebildet sein, welche eine Autofokuseinrichtung aufweist, mittels welcher die erfasste Oberfläche automatisch scharf gestellt wird. In alternativen Ausgestaltungsvarianten kann jedoch auch eine manuelle Einrichtung zum Scharfstellen des Erfassungsbereiches genutzt werden.

Wird mittels dem 1D- oder 2D-Messsystem ein Defekt detektiert, wird dieser im Folgenden mit dem 2½D- oder 3D-Messsystem dreidimensional erfasst, um detaillierte Eigenschaftendes Defektes, wie beispielsweise dessen Abmessungen, insbesondere dessen Höhenkoordinaten, ermitteln zu können. Das 2½D- oder 3D-Messsystem weist hierfür einen 2½D- oder 3D-Sensor auf, wobei unter einem 2½D-Sensor ein Sensor zu verstehen ist, durch dem jedem x-y-Paar in einer Fläche, also den Flächenkoordinaten, genau eine Höhenkoordinate z zugeordnet wird. Bei einem 3D-Sensor hingegen können jeder Flächenkoordinate beliebig viele Höhenkoordinaten zugeordnet werden. Das 2½D- oder 3D-Messsystem ist vorzugsweise als Mikroskopeinrichtung ausgestaltet.

Vorzugsweise weist auch das 2½D- oder 3D-Messsystem eine Autofokuseinrichtung auf, da der Prüfprozess durch das Vorsehen einer Autofokuseinrichtung günstigerweise beschleunigt werden kann. Ferner kann jedoch auch das 2½D- oder 3D-Messsystem manuell eingestellt werden. Ganz besonders bevorzugt kann der von dem 1D- oder 2D-Messsystem ermittelte Fokus von dem 2½D- oder 3D-Messsystem übernommen werden, wodurch der Prüfprozess beschleunigt werden kann.

Die von dem 2½D- oder 3D-Messsystem erfassten Daten werden an eine Messstellendatenauswertungseinheit übermittelt, an welche auch die von dem 1D- oder 2D-Messsystem erfassten Daten gesendet werden. Die Messstellendatenauswertungseinheit erstellt automatisch anhand dieser Daten einen Report. Der Report kann beispielsweise eine Abbildung des Defektes, die Abmessungen des Defektes und Informationen darüber, ob der Prüfkörper von einem Nutzer definierte Schwellwerte einhält oder nicht, beinhalten.

Die Messstellendatenauswertungseinheit ist vorzugsweise ein Computer, welcher ein entsprechendes Datenverarbeitungs- und -ausgabeprogramm aufweist. Günstigerweise besitzt die Messstellendatenauswertungseinheit ein Programm, welches es ermöglicht, die von dem 2½D- oder 3D-Messsystem erfassten Topographiedaten abzubilden und damit den Defekt des Prüfkörpers grafisch darzustellen. Alternativ können jedoch auch nur einzelne, beispielsweise vom Nutzer ausgewählte Messwerte, wie beispielsweise die Tiefe eines Kratzers oder die Höhe einer Materialansammlung, als Zahlenwert von der Messstellendatenauswertungseinheit angegeben werden. Auch ist es möglich, dass die Messstellendatenauswertungseinheit dem Nutzer mitteilt, wenn der Prüfkörper keine Defekte aufweist. Die Messstellendatenauswertungseinheit kann ferner eine Signaleinrichtung aufweisen, welche beispielsweise bei Ermittlung eines Defektes, welcher einen zuvor vom Nutzer festgelegten Grenzwert überschreitet und/oder bei Vorliegen keines Defektes, ein optisches, akustisches und/oder haptisches Signal ausgibt.

Vorteilhafterweise liegt der Prüfkörper während des gesamten Prüfprozesses, also auch während des Transportes des Prüfkörpers von dem 1D- oder 2D-Messsystem zu dem 2½D- oder 3D-Messsystem und der Erfassung des Prüfkörpers durch das 1D- oder 2D-Messsystem und das 2½D- oder 3D-Messsystem, auf einem ersten und einem zweiten von der Prüfkörperauflage- und -rotationseinheit umfassten Auflagekörper auf. Sind die Auflagekörper Auflagerollen, sind die beiden Auflagekörper vorteilhafterweise parallel zueinander, in einer Ebene liegend ausgerichtet. Als Auflagekörper können jedoch auch andere Körper, wie beispielsweise Kegel oder Kegelstümpfe, zum Einsatz kommen, die so angeordent werden, dass sich ihre Rotationsachsen in einem Punkt schneiden. Mittels der Auflagekörper ist der Prüfkörper mindestens um 360° um seine eigene Drehachse drehbar, wodurch die Erfassung der kompletten Oberfläche, insbesondere der Oberfläche des Prüfkörpers, durch das 1D- oder 2D-Messsystem und das 2½D- oder 3D-Messsystem ermöglicht wird. Der Prüfkörper wird hierbei parallel zu den beiden Auflagekörpern mittig der beiden Auflagekörper platziert.

Zum Transport des Prüfkörpers von dem 1D- oder 2D-Messsystem zu dem 2½D- oder 3D-Messsystem sind der erste und der zweite Auflagekörper auf einer Schlitteneinheit aufgebracht. Der Prüfkörper kann somit automatisch, ohne umgelagert werden zu müssen, wenigstens von dem 1D- oder 2D-Messsystem zu dem 2½D- oder 3D-Messsystem transportiert werden. Ferner kann die den ersten und den zweiten Auflagekörper aufweisende Prüfkörperauflage- und -rotationseinheit auch mittels der Schlitteneinheit zu einem Be- und/oder einem Entladeort transportiert werden. Zur optimalen Positionierung der Schlitteneinheit und damit des Prüfkörpers unter dem 1D- oder 2D-Messsystem bzw. dem 2½D- oder 3D-Messsystem und/oder zum Transport zum Be- und/oder Entladeort, ist die Schlitteneinheit wenigstens in zwei Achsrichtungen automatisch bewegbar. Vorteilhafterweise wird die Prüfkörperauflage- und -rotationseinheit in Abhängigkeit von einem Messergebnis mit der Schlitteneinheit zu einer bestimmten Position gefahren. Beispielsweise kann die Prüfkörperauflage- und -rotationseinheit zu einer Position transportiert werden, an welcher die nicht funktionsfähigen Prüfkörper aussortiert werden und/oder an welcher die funktionsfähigen Prüfkörper zu ihrem Einsatzort weitergeleitet werden. Ferner kann die Schlitteneinheit in speziellen Varianten der erfindungsgemäßen Prüfvorrichtung auch manuell verfahren werden.

Vorteilhafterweise wird die Bewegung der Schlitteneinheit durch ein Signal der Messstellendatenauswertungseinheit ausgelöst, welche mit dem 1D- oder 2D-Messsystem gekoppelt ist und entsprechende Informationen von dieser erhält, wenn ein Defekt detektiert wurde und der Erfassungsprozess der gesamten Oberfläche des Prüfkörpers durch das 1D- oder 2D-Messsystem abgeschlossen ist. In alternativen Ausgestaltungsvarianten der erfindungsgemäßen Prüfvorrichtung kann der Prüfkörper jedoch auch unmittelbar nach Detektion eines Defektes durch das 1D- oder 2D-Messsystem zu dem 2½D- oder 3D-Messsystem transportiert werden. Insofern bei Erfassung des Defektes mit dem 2½D- oder 3D-Messsystem festgestellt wird, dass der Defekt die von dem Nutzer definierten Schwellenwerte nicht überschreitet, kann der Prüfkörper wieder zurück zu dem 1D- oder 2D-Messsystem transportiert werden und die noch nicht auf Fehler geprüfte Oberfläche des Prüfkörpers mit dem 1D- oder 2D-Messsystem hinsichtlich Defekten bzw. Fehlern erfasst werden. Wird dabei wenigstens ein festgelegter Schwellenwert überschritten, wird der Prüfkörper aussortiert.

In einer bevorzugten Ausführungsform der erfindungsgemäßen Prüfvorrichtung ist die Schlitteneinheit auf einem Maschinenbett vorgesehen, auf welchem auch das 1D- oder 2D-Messsystem und das 2½D- oder 3D-Messsystem angeordnet sind. Die Prüfvorrichtung an sich kann anwendungsfallspezifisch transportabel oder ortsfest ausgestaltet sein.

Zur Erzeugung einer Drehbewegung ist wenigstens der zweite Auflagekörper mit einem Antriebsmotor verbunden. Durch Rotation des zweiten Auflagekörpers um seine Rotationsachse und dessen Kontakt mit dem Prüfkörper wird die Rotationsbewegung des zweiten Auflagekörpers durch Reibung auf den Prüfkörper übertragen. Durch Drehung des Prüfkörpers um mindestens 360° kann die komplette Oberoberfläche des Prüfkörpers problemlos mit dem 1D- oder 2D-Messsystem auf Fehler gescannt und gegebenenfalls mittels dem 2½D- oder 3D-Messsystem hinsichtlich der Fehlerdetails untersucht werden. Der erste um seine Rotationsachse drehbare Auflagekörper wird vorzugsweise durch den Kontakt mit dem Prüfkörper und dessen Drehbewegung in Rotation versetzt. In weiteren Ausgestaltungsvarianten der erfindungsgemäßen Prüfvorrichtung können jedoch auch der erste und der zweite Auflagekörper oder auch der erste Auflagekörper angetrieben werden.

Günstigerweise sind die beiden Auflagekörper gleich ausgebildet, können in anderen Varianten der Prüfvorrichtung jedoch auch unterschiedlich ausgestaltet sein. So können diese beispielsweise aus unterschiedlichen Materialien bestehen, unterschiedliche Oberflächenstrukturen und/oder -beschichtungen und/oder verschiedene Abmessungen aufweisen.

Um eine genaue Position des ermittelten Defektes bestimmen zu können und diesen bei der Analyse mit dem 2½D- oder 3D-Messsystem schnell wiederzufinden, ist vorzugsweise der erste, Auflagekörper mit einem Winkellagegeber verbunden. Ferner ist zur Datenübertragung das 1D- oder 2D-Messsystem mittels der Messstellendatenauswertungseinheit mit dem 2½D- oder 3D-Messsystem gekoppelt.

Durch den Winkellagegeber kann stets die aktuelle Lage und/oder ein aktueller Drehwinkel des Prüfkörpers ermittelt werden. Bei Detektion eines Defektes auf und/oder in der Oberfläche des Prüfkörpers durch das 1D- oder 2D-Messsystem können so genaue Positionsdaten des Defektes bestimmt werden. Die Drehwinkelkoordinaten werden zur Positionierung des Defektes unter dem 2½D- oder 3D-Messsystem verwendet.

In weiteren Ausführungsformen der erfindungsgemäßen Prüfvorrichtung kann alternativ oder zusätzlich zu dem Winkellagegeber die aktuelle Position bzw. Rotationslage des Prüfkörpers auch ausgehend von einer Nulllage des Prüfkörpers anhand des Durchmessers des Prüfkörpers und/oder einer Drehzahl des Antriebes und unter Ermittlung der Geschwindigkeit und der Zeit berechnet werden. Hierzu ist vorzugsweise der Antrieb mit der Messstellendatenauswertungseinheit verbunden, welche anhand von Antriebsdaten die aktuelle Lage des Prüfkörpers berechnet.

Um die Koordinaten des detektierten Defektes ermitteln zu können, wird zu Beginn der Erfassung des Prüfkörpers mit dem 1D- oder 2D-Messsystem ein entlang einer Mantellinie des Prüfkörpers verlaufender Nullpunkt definiert, anhand dessen die Koordinaten des Defektes bestimmt werden. Durch Koordinatentransformation werden die bei der ein- oder zweidimensionalen Erfassung des Prüfkörpers in zwei Koordinatenrichtungen ermittelten Koordinaten in Drehwinkelkoordinaten transformiert. Nach Transformation der Koordinaten und deren Übermittlung an das 2½D- oder 3D-Messsystem kann der Defekt ohne erneutes Scannen der Oberfläche auf Fehler direkt im Blickwinkel des 2½D- oder 3D-Messsystems ausgerichtet werden. Der Defekt wird hierbei automatisch nach Erfassen des Prüfkörpers mit dem 1D- oder 2D-Messsystem durch laterale Bewegung des auf der Prüfkörperauflage- und -rotationseinheit aufliegenden Prüfkörpers mit der Schlitteneinheit und durch Drehung des Prüfkörpers durch wenigstens den zweiten Auflagekörper unter dem 2½D- oder 3D-Messsystem positioniert. Ferner kann auch zunächst die gesamte Oberfläche des Prüfkörpers mit dem 1D- oder 2D-Messsystem erfasst werden und erst im Anschluss bei Detektion wenigstens eines Defektes zu dem 2½D- oder 3D-Messsystem transportiert werden. Hierbei wird der Prüfkörper nach der Analyse eines ersten Defektes durch das 2½D- oder 3D-Messsystem automatisch durch den zweiten angetriebenen Auflagekörper gedreht, sodass ein nächster Defekt mit dem 2½D- oder 3D-Messsystem dreidimensional erfasst werden kann. Dieser Prozess wird solange fortgeführt, bis alle durch das 1D- oder 2D-Messsystem gefundenen Defekte mit dem 2½D- oder 3D-Messsystem erfasst wurden und/oder ein Defekt mit grenzwertüberschreitenden Abmessungen detektiert wurde und der Prüfkörper aussortiert wird. Im Vergleich zum Stand der Technik ermöglicht die erfindungsgemäße Prüfvorrichtung damit eine sehr schnelle, effektive, kostengünstige und vor allem auch nachvollziehbare Prüfung von Prüfkörpern.

Das 1D- oder 2D-Messsystem, das 2½D- oder 3D-Messsystem, die Prüfkörperauflage- und -rotationseinheit und die Messstellenerfassungseinrichtung sind vorzugsweise derart miteinander gekoppelt, dass beispielsweise mittels eines einzigen Knopfdruckes der Prüfkörper analysiert und ein Report von der Messstellenerfassungseinrichtung ausgegeben werden kann. Eine derartige Einknopfbedienung der erfindungsgemäßen Prüfvorrichtung ermöglicht eine sehr einfache, fehlerarme und schulungsfreundliche Bedienung der Prüfvorrichtung.

In einer bevorzugten Ausführungsform der erfindungsgemäßen Prüfvorrichtung weist das 1D- oder 2D-Messsystem ein Bildgebungssystem mit Dunkelfeldbeleuchtung auf. Ein solches Bildgebungssystem mit Dunkelfeldbeleuchtung kann beispielsweise ein Dunkelfeldmikroskop sein. Bei dem Einsatz eines Bildgebungssystems mit Dunkelfeldbeleuchtung wird die Oberfläche des Prüfkörpers beleuchtet, wobei Oberflächenfehler, wie beispielsweise Risse, im Vergleich zu der restlichen glatten Oberfläche hell erscheinen. Defekte werden damit stark hervorgehoben und können leicht erkannt werden. In alternativen Ausführungsformen der erfindungsgemäßen Prüfvorrichtung können jedoch auch andere bildgebende Systeme, beispielsweise ein Hellfeldmikroskop zur Defekterkennung verwendet werden.

Besonders bevorzugt weist das 2½D- oder 3D-Messsystem einen 2½D- oder einen 3D-Topographiesensor auf. Der Topographiesensor kann beispielsweise als optischer und/oder taktiler Sensor ausgebildet sein. Ferner kann jedoch auch ein chromatisch konfokaler Sensor eingesetzt werden. Der Topographiesensor dient vorrangig dazu, eine dreidimensionale Punktwolke oder ein Höhenprofil von einem Bereich, in welchem der Defekt liegt, zu erstellen. Durch Kopplung des 2½D- oder 3D-Messsystems mit der Messstellendatenauswertungseinheit wird von der Punktwolke oder dem Höhenprofil eine Abbildung erstellt, welche den Defekt veranschaulicht.

Als vorteilhaft hat es sich auch herausgestellt, wenn zur Höhenverstellung eines Objektivs des 2½D- oder 3D-Messsystems eine Positioniereinheit mit dem Objektiv verbunden ist. Die 2½D- oder 3D-Messung des detektierten Defektes erfolgt durch Höhenverschiebung des Objektivs, sodass auf unterschiedlichen Ebenen je ein optischer Schnitt von der Messstelle erzeugt wird. Die optischen Schnitte werden beispielsweise durch einen Algorithmus ausgewertet, welcher die in jeder Höhe unterschiedlichen Kontraste in Bezug auf ein hineinprojiziertes optisches Gitter setzt oder einen Flächenkontrast auswertet, um die genaue Lage der jeweiligen Oberflächenpunkte zu analysieren und damit insbesondere die Tiefe des Defektes ermitteln zu können. Der Algorithmus ist in der Messstellendatenauswertungseinheit hinterlegt, an welche die Messergebnisse übermittelt werden und welche das Ergebnis des Messvorganges ausgibt.

In einer besonders günstigen Ausführungsform der erfindungsgemäßen Prüfvorrichtung weist die Prüfkörperauflage- und -rotationseinheit wenigstens eine Führung zum Verändern eines Abstandes zwischen dem ersten Auflagekörper und dem zweiten Auflagekörper auf. Vorteilhafterweise können durch das Variieren des Abstandes zwischen den beiden Auflagekörpern problemlos Prüfkörper mit unterschiedlichen Abmessungen auf den Auflagekörpern aufgebracht werden. Ferner kann durch das Variieren des Abstandes zwischen den beiden Auflagekörpern auch die Position eines auf den Auflagekörpern aufgebrachten Prüfkörpers in einer Richtung, welche senkrecht zu einer Längsrichtung der Auflagekörpern und senkrecht zu einer Richtung, in welcher die Auflagekörper nebeneinander angeordnet sind, verläuft, verändert werden.

Als günstig hat es sich hierbei erwiesen, wenn die Prüfvorrichtung wenigstens eine Wegmesseinrichtung zum Bestimmen eines Abstandes zwischen dem ersten Auflagekörper und dem zweiten Auflagekörper aufweist. Mittels des Wegmesssystems kann die Positionierung von Prüfkörpern mit unterschiedlichen Durchmessern erleichtert werden, da der Abstand zwischen den beiden Auflagekörpern exakt eingestellt werden kann. Je nach Ausführungsform der erfindungsgemäßen Prüfvorrichtung kann das Wegmesssystem beispielsweise einen Ultraschallsensor, einen Lasersensor, einen Lichtsensor und/oder Schleifkontakte aufweisen.

Als vorteilhaft hat es sich auch erwiesen, wenn der erste Auflagekörper und/oder der zweite Auflagekörper eine Antirutschbeschichtung oder -oberflächenstruktur aufweisen. Durch eine Antirutschbeschichtung wird die Reibung zwischen dem Prüfkörper und den Auflagekörpern erhöht, wodurch die Drehbewegung der Auflagekörper auf den Prüfkörper bzw. von dem Prüfkörper auf den nicht angetriebenen Auflagekörper besser übertragen werden kann.

Besonders bevorzugt ist über dem ersten Auflagekörper und/oder dem zweiten Auflagekörper wenigstens ein aus Viton ausgebildeter O-Ring vorgesehen, da so ein optimaler

Kontakt zwischen dem Prüfkörper und dem jeweiligen Auflagekörper hergestellt werden kann. Ferner können aber auch mehr oder weniger O-Ringe um die Auflagekörper angebracht sein. In alternativen Ausführungsformen der erfindungsgemäßen Prüfvorrichtung kann auch die komplette Oberfläche der Auflagekörper mit einer Antirutschbeschichtung versehen sein. Auch kann die Antirutschbeschichtung mit einer beliebigen Struktur, beispielsweise gepunktet, gitterförmig oder linienartig, auf die Auflagekörper aufgebracht sein. Ebenso können die Auflagekörper auch an sich aus rutschbeständigem Material, beispielsweise Gummi, ausgebildet sein. Die Verwendung von Viton als Antirutschbeschichtung hat sich hinsichtlich dessen Eigenschaften und Kosten als besonders vorteilhaft erwiesen, jedoch können auch andere Materialien als Antirutschbeschichtung verwendet werden.

In einer besonders bevorzugten Ausgestaltungsvariante der erfindungsgemäßen Prüfvorrichtung weist diese eine mit der Messstellendatenauswertungseinheit gekoppelte Prüfkörpersortiervorrichtung auf. Vorteilhafterweise können so Prüfkörper ohne Defekte direkt von dem 1D- oder 2D-Messsystem zum Verwendungsort, beispielsweise einem Lager, einer Produktionsstätte oder einem Versand, transportiert werden. Fehler aufweisende Prüfkörper hingegen können mittels der Prüfkörpersortiereinrichtung zu dem 2½D- oder 3D-Messsystem transportiert werden und von dort, in Abhängigkeit des Messergebnisses, entweder ebenfalls dem Verwendungsort oder einem Ausschussteilelager zugeführt werden. Je nach Ausführungsform der erfindungsgemäßen Prüfvorrichtung kann die Prüfkörpersortiervorrichtung beispielsweise eine Greifereinrichtung, eine Stoßeinrichtung, eine Schrankeneinrichtung und/oder eine Weicheneinrichtung aufweisen. Die Prüfvorrichtung kann auch mehrere Prüfkörpersortiervorrichtungen umfassen. Beispielsweise kann eine Prüfkörpersortiervorrichtung in Nähe des 1D- oder 2D-Messsystems und eine weitere in Nähe des 2½D- oder 3D-Messsystems angeordnet sein.

In einer optionalen Ausgestaltungsvariante der erfindungsgemäßen Prüfvorrichtung sind das 1D- oder 2D-Messsystem und/oder das 2½D- oder 3D-Messsystem an einem über die Prüfkörperauflage- und -rotationseinheit führenden Portal der Prüfvorrichtung angebracht. Das Portal ist vorteilhafterweise auf oder an dem Maschinenbett vorgesehen, auf welchem auch der die Prüfkörperauflage- und -rotationseinheit tragende Schlitten vorgesehen ist. Durch das Vorsehen des 1D- oder 2D-Messsystems und des 2½D- oder 3D-Messsystems an einem gemeinsamen Portal können diese besonders einfach und im Hinblick auf dem Prüfkörpertransport vorteilhaft gehalten und positioniert werden. So besteht die Möglichkeit, dass die Position des 1D- oder 2D-Messsystems und/oder des 2½D- oder 3D-Messsystems in Richtung einer Portallängsrichtung, beispielsweise in Abhängigkeit der Prüfkörperabmessungen, verändert wird. Ebenso können das 1D- oder 2D-Messsystem und das 2½D- oder 3D-Messsystem jedoch auch positionsfest an dem Portal angebracht sein. In alternativen Ausführungsvarianten der erfindungsgemäßen Prüfvorrichtung können das 1D- oder 2D-Messsystem und/oder das 2½D- oder 3D-Messsystem jedoch auch in anderer Art und Weise an oder in der Nähe der Prüfkörperauflage- und - rotationseinheit vorgesehen sein. So kann das 1D- oder 2D-Messsystem und das 2½D- oder 3D-Messsystem auch jeweils an einem Einzelstativ angebracht sein. Günstigerweise sind das 1D- oder 2D-Messsystem und/oder das 2½D- oder 3D-Messsystem austauschbar vorgesehen, sodass diese durch ein 1D- oder 2D-Messsystem und/oder ein 2½D- oder 3D-Messsystem mit anderen Eigenschaften ausgetauscht werden können. Dies bietet sich insbesondere dann an, wenn mit der erfindungsgemäßen Prüfvorrichtung Prüfkörper mit unterschiedlichen Eigenschaften geprüft werden sollen.

Die Aufgabe der vorliegenden Erfindung wird ferner durch ein Verfahren gemäß dem unabhängigen Anspruch 11 gelöst, bei welchem der Prüfkörper auf die einen um seine Rotationsachse drehbaren ersten Auflagekörper und einen um seine Rotationsachse drehbaren zweiten Auflagekörper aufweisende Prüfkörperauflage- und -rotationseinheit aufgelegt und zwischen den Auflagekörpern rotiert wird, wobei wenigstens ein Drehwinkel des Prüfkörpers auf der Prüfkörperauflage- und -rotationseinheit ermittelt wird, wenigstens der zweite Auflagekörper angetrieben wird, mit einer Messstellenerfassungseinrichtung des 1D- oder 2D-Messsystems Positionskoordinaten wenigstens einer Messstelle auf dem Prüfkörper ermittelt werden, der Prüfkörper mittels der auf einer Schlitteneinheit vorgesehenen Prüfkörperauflage- und -rotationseinheit von dem 1D- oder 2D-Messsystem zu dem 2½D- oder 3D-Messsystem transportiert wird, mit einer Topographieerfassungseinrichtung des 2½D- oder 3D-Messsystems Topographiedaten der wenigstens einen Messstelle erfasst werden, und die von dem 1D- oder 2D-Messsystem und dem 2½D- oder 3D-Messsystem erfassten Daten einer Messstellendatenauswertungseinheit übermittelt und von dieser im Hinblick darauf ausgewertet werden, ob wenigstens ein Defekt und/oder eine Strukturstelle auf der Oberfläche des Prüfkörpers vorhanden ist, der einen vorgegebenen Schwellenwert überschreitet.

Das erfindungsgemäße Verfahren eignet sich zur einfachen und schnellen Detektion und Analyse von Defekten bzw. Fehlern und/oder Strukturstellen, wobei dieses nachfolgend beispielhaft für die Detektion von Defekten beschrieben wird.

Zur Prüfung einer Oberfläche eines rotationssymmetrischen, insbesondere eines zylinderförmigen Prüfkörpers auf Fehler oder Defekte, wie beispielsweise Risse, Riefen, Abdrücke und/oder Materialansammlungen, wird die Oberfläche des Prüfkörpers erfindungsgemäß zunächst mit einem 1D- oder 2D-Messsystem ein- oder zweidimensional erfasst. Hierzu wird der Prüfkörper auf einen ersten und einen zweiten von einer Prüfkörperauflage- und - rotationseinheit umfasste Auflagekörper aufgelegt und durch Antreiben wenigstens eines der Auflagekörper in Rotation versetzt. Um die komplette Oberfläche des Prüfkörpers, insbesondere dessen komplette Oberfläche, auf Defekte zu untersuchen, wird der Prüfkörper wenigstens um 360°, besonders bevorzugt um 370°, um seine eigene Achse gedreht.

Wird hierbei ein Oberflächenfehler von dem 1D- oder 2D-Messsystem auf der Oberfläche des Prüfkörpers detektiert, wird der Prüfkörper, speziell der Bereich des Prüfkörpers, welcher den Defekt aufweist, mit einem 2½D- oder 3D-Messsystem zweieinhalb- oder dreidimensional erfasst, um detaillierte Angaben über den Fehler, insbesondere Höhenkoordinaten des Fehlers zu ermitteln. Hierbei werden speziell Topographiedaten mit einer von dem 2½D- oder 3D-Messsystem umfassten Topographieerfassungseinrichtung erfasst, welche an eine Messstellendatenauswertungseinheit übermittelt werden. Durch die Messstellendatenauswertungseinheit werden die Messdaten aufbereitet und einem Nutzer beispielsweise in Form einer Abbildung des mit dem 2½D- oder 3D-Messsystem gescannten Bereiches und/oder als Zahlenwerte ausgegeben. Die Messstellendatenauswertungseinheit zeigt dem Nutzer an, ob wenigstens ein zuvor vom Nutzer definierter Schwellenwert überschritten wurde und der jeweilige Prüfkörper auszusortieren ist oder ob der Prüfkörper vom Nutzer funktionsgemäß verwendet werden kann.

Erfindungsgemäß liegt der Prüfkörper während des gesamten Prüfprozesses auf den beiden Auflagekörpern auf. Ein Transport des Prüfkörpers von dem 1D- oder 2D-Messsyste zu dem 2½D- oder 3D-Messsystem erfolgt hierbei durch automatisches Verfahren der den Prüfkörper tragenden Auflagekörper mittels einer Schlitteneinheit. Der Transport der Auflagekörper wird erfindungsgemäß durch ein Signal der mit dem 1D- oder 2D-Messsystem gekoppelten Messstellendatenauswertungseinheit ausgelöst, sobald diese von dem 1D- oder 2D-Messsystem die Information erlangt, dass der zweidimensionale Prüfprozess abgeschlossen ist und wenigstens ein Fehler detektiert wurde bzw. der Prüfprozess unterbrochen wird, da ein Fehler detektiert wurde.

Damit der wenigstens eine, von dem 1D- oder 2D-Messsystem detektierte Defekt unverzüglich bei Platzierung des Prüfkörpers an oder in dem 2½D- oder 3D-Messsystem wiedergefunden wird, wird die Position des Defektes bei Detektion durch den 1D- oder 2D-Messsystems bestimmt. Hierzu ist wenigstens der erste Auflagekörper mit einem Winkellagegeber verbunden, mittels welchem der Drehwinkel des auf den Auflagekörpern aufliegenden Prüfkörpers bestimmt wird. Insofern ein Defekt gefunden wurde, wird der entsprechende Drehwinkel durch Kopplung des Winkellagegebers mit der Messstellendatenauswertungseinheit bestimmt und der entsprechende Wert an das 2½D- oder 3D-Messsystem übermittelt, sodass dieser bei Anordnung des Prüfkörpers in oder an das 2½D- oder 3D-Messsystem eingestellt werden kann, ohne erneut die Oberfläche des Prüfkörpers nach Defekten abscannen zu müssen.

In alternativen Ausgestaltungsvarianten kann der Drehwinkel des Prüfkörpers auch zusätzlich oder alternativ anhand der Drehzahl des angetriebenen Auflagekörpers und einem Durchmesser des Prüfkörpers ermittelt werden.

Zur Bestimmung der Position des Prüfkörpers wird zu Beginn der Prüfung ein entlang einer Oberlinie des Prüfkörpers verlaufender Nullpunkt definiert, welcher als Ausgangspunkt für die Drehwinkelbestimmung dient. Bei Detektion eines Defektes werden die aktuellen Koordinaten des Defektes in zwei Achsrichtungen ermittelt und gespeichert. Durch Koordinatentransformation werden diese Koordinaten in Drehwinkelkoordinaten überführt und dem 2½D- oder 3D-Messsystem zur Positionierung des Prüfkörpers zur Verfügung gestellt.

Die Positionierung des Prüfkörpers erfolgt durch eine translatorische Bewegung einer den Prüfkörper tragenden Prüfkörperauflage- und -rotationseinheit mittels der Schlitteneinheit und einer Rotation des Prüfkörpers durch den wenigstens einen angetriebenen Auflagekörper. Für eine optimale Positionierung ist die Prüfkörperauflage- und -rotationseinheit wenigstens in zwei Achsrichtungen verfahrbar.

In einer bevorzugten Ausgestaltung des erfindungsgemäßen Verfahrens wird die ein- oder zweidimensionale Erfassung eines Bereiches der Oberfläche des Prüfkörpers mit einem Bildgebungssystem mit Dunkelfeldbeleuchtung vorgenommen. Der Prüfkörper wird hierbei durch das Bildbeleuchtungssystem, welches beispielsweise als Dunkelfeldmikroskop ausgebildet ist, angestrahlt, wodurch Risse und andere Defekte in der Prüfkörperoberfläche sichtbar werden. In alternativen Verfahrensvarianten kann die Erfassung des Prüfkörpers jedoch auch mittels eines Hellfeldmikroskops oder eines anderen bildgebenden Systems erfolgen.

Bei der vorliegenden Erfindung kann das eindimensionale Erfassen eines Bereiches der Oberfläche des Prüfkörpers auch beispielsweise mit einem taktilen Sensor oder Messsystem vorgenommen werden.

Insofern ein Defekt auf oder in der Oberfläche des Prüfkörpers detektiert wurde, wird der Defekt des Prüfkörpers mit einem 2½D- oder einem 3D-Topographiesensor zweieinhalb- oder dreidimensional erfasst. Bei der Erfassung des Defektes mit dem Topographiesensor wird ein den Defekt erfassender Ausschnitt der Oberfläche des Prüfkörpers abbildende Punktwolke oder ein Höhenprofil erstellt, welche/s von der mit dem 2½D- oder 3D-Messsystem gekoppelten Messstellendatenauswertungseinheit grafisch dargestellt wird und/oder relevante Messwerte von dieser ausgeben werden. Je nach Ausführungsform des erfindungsgemäßen Verfahrens kann beispielsweise ein optischer, taktiler und/oder chromatisch konfokaler Sensor als Topographiesensor eingesetzt werden.

Als vorteilhaft hat es sich erwiesen, wenn eine 2½D- oder 3D-Messung des Prüfkörpers durch Höhenverstellung wenigstens eines Objektives des 2½D- oder 3D-Messsystems erfolgt, wobei in mehreren übereinanderliegenden Ebenen optische Schnitte erzeugt werden, welche durch einen Algorithmus ausgewertet werden. Vorzugsweise erfolgt die 2½D- oder 3D-Messung des detektierten Defektes durch Höhenverschiebung des Objektivs, sodass auf unterschiedlichen Ebenen je ein Bild von der Messstelle erzeugt wird. Die optischen Schnitte werden beispielsweise durch einen Algorithmus ausgewertet, welcher die in jeder Höhe unterschiedlichen Kontraste in Bezug zu einen hineinprojizierten optischen Gitter setzt oder einen Flächenkontrast auswertet, um die genaue Lage der jeweiligen Oberflächenpunkte zu analysieren und damit insbesondere die Tiefe des Defektes ermitteln zu können.

In einer bevorzugten Ausgestaltungsvariante des erfindungsgemäßen Verfahrens wird ein Abstand zwischen dem ersten Auflagekörper und dem zweiten Auflagekörper mit einer Wegmesseinrichtung bestimmt. Damit kann der Abstand der beiden Auflagekörper zueinander optimal an den Durchmesser des Prüfkörpers angepasst werden. Je nach Ausführungsform des erfindungsgemäßen Verfahrens kann beispielsweise ein Ultraschallsensor, ein Lasersensor und/oder ein Lichtsensor zum Ermitteln des Abstandes zwischen den beiden Auflagekörpern verwendet werden.

Als besonders günstig hat es sich erwiesen, wenn ein Abstand zwischen dem ersten Auflagekörper und dem zweiten Auflagekörper in Abhängigkeit eines Durchmessers des Prüfkörpers verändert wird. So können Prüfkörper mit unterschiedlichen Durchmessern problemlos geprüft werden.

Vorteilhafte Ausführungsformen der vorliegenden Erfindung, deren Aufbau, Funktion und Vorteile sind im Folgenden anhand von Figuren näher erläutert, wobei
- Figur 1: schematisch eine Ausführungsform einer erfindungsgemäßen Prüfvorrichtung in einer Vorderansicht von rechts oben zeigt, und
- Figur 2: schematisch einen Ausschnitt der in Figur 1 dargestellten erfindungsgemäßen Prüfvorrichtung in einer Vorderansicht von oben zeigt, welcher eine Schlitteneinheit, einen ersten und einen zweiten Auflagekörper und einen auf den Auflagekörpern aufgebrachten Prüfkörper veranschaulicht.

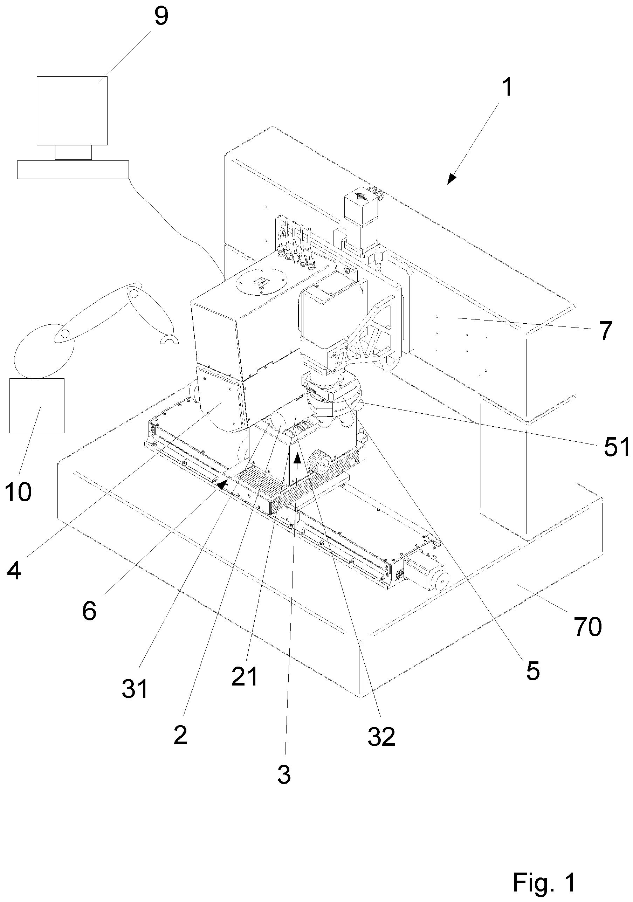

Figur 1 zeigt schematisch eine Ausführungsform einer erfindungsgemäßen Prüfvorrichtung 1 in einer Vorderansicht von rechts oben. Die Prüfvorrichtung 1 weist zum Prüfen einer Oberfläche 21 eines Prüfkörpers 2 ein an einem Portal 7 angebrachtes 1D- oder 2D-Messsystem 4 und ein ebenfalls an dem Portal 7 angeordnetes 2½D- oder 3D-Messsystem 5 auf.

In dem in Figur 1 gezeigten Ausführungsbeispiel der Prüfvorrichtung 1 sind das 1D- oder 2D-Messsystem 4 als auch das 2½D- oder 3D-Messsystem 5 entlang des Portals 7 verfahrbar. In weiteren Varianten der Prüfvorrichtung 1 können das 1D- oder 2D-Messsystem 4 und/oder das 2½D- oder 3D-Messsystem 5 jedoch auch ortsfest an dem Portal 7 angebracht sein. In alternativen Ausgestaltungen sind das 1D- oder 2D-Messsystem 4 und/oder das 2½D- oder 3D-Messsystem 5 nicht an einem Portal der Prüfvorrichtung 1 vorgesehen, sondern sind beispielsweise auch an einer Ständereinheit angeordnet.

Das 1D- oder 2D-Messsystem 4 ist in dem gezeigten Ausführungsbeispiel als Kameraeinrichtung mit Dunkelfeldbeleuchtung ausgebildet, mittels welcher die Oberfläche 21 des Prüfkörpers 2 hinsichtlich Defekten ein- oder zweidimensional erfasst wird. Wird ein Defekt in oder an der Oberfläche des Prüfkörpers 2 durch das 1D- oder 2D-Messsystem 4 detektiert, wird dieser Defekt anschließend mit dem 2½D- oder 3D-Messsystem 5 zweieinhalb- oder dreidimensional erfasst. Das 2½D- oder 3D-Messsystem 5 ist in dem gezeigten Ausführungsbeispiel als Mikroskopeinrichtung ausgebildet und weist einen Topographiesensor auf. Durch die Analyse des Defektes mit dem Topographiesensor können Abmessungen des Defektes, insbesondere Höhenkoordinaten, bestimmt werden, welche ausschlaggebend dafür sind, ob der Prüfkörper 2 als Ausschussteil aussortiert oder funktionsfähiges Teil verwendet wird.

Zur Abbildung und Auswertung der von dem 2½D- oder 3D-Messsystem 5 ermittelten Topographiedaten ist das 2½D- oder 3D-Messsystem 5 mit einer Messstellendatenauswertungseinheit 9 verbunden. Die Messstellendatenauswertungseinheit 9 ist in dem in Figur 1 gezeigten Ausführungsbeispiel als Computer ausgebildet, welcher ein Programm aufweist, welches es ermöglicht, die von dem 2½D- oder 3D-Messsystem 5 erhaltenen Topographiedaten graphisch oder als Zahlenwert auszugeben und einem Nutzer basierend auf diesen Daten und den von einem Benutzer zuvor festgelegten Schwellenwerten mitzuteilen, ob der Prüfkörper 2 die gewünschten Anforderungen erfüllt oder als Ausschussteil aussortiert werden muss.

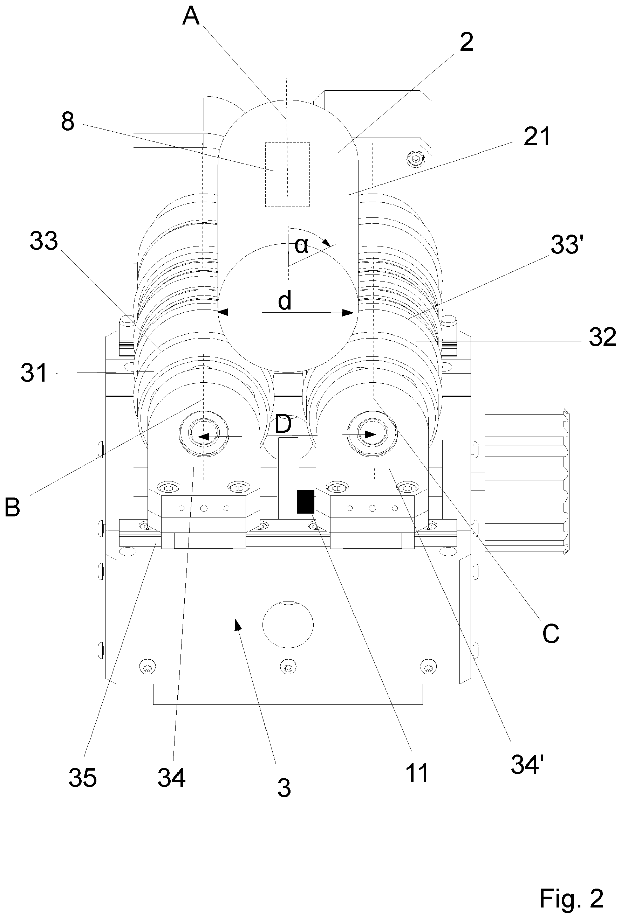

Unterhalb des 1D- oder 2D-Messsystems 4 und des 2½D- oder 3D-Messsystems 5 ist eine Prüfkörperauflage- und -rotationseinheit 3 vorgesehen, auf welcher der Prüfkörper 2 während des gesamten Prüfprozesses aufliegt. Die Prüfkörperauflage- und -rotationseinheit 3 weist einen ersten Auflagekörper 31 und einen zweiten Auflagekörper 32 auf. Der erste Auflagekörper 31 und der zweite Auflagekörper 32 sind derart in einer Haltevorrichtung 34, 34' gelagert, dass diese jeweils um ihre eigene Rotationsachse B, C drehbar sind. Wie in Figur 2 ersichtlich, sind der erste Auflagekörper 31 und der zweite Auflagekörper 2 als parallel zueinander ausgerichtete Auflagerollen ausgebildet. Auf den beiden Auflagekörpern 31, 32 ist der hinsichtlich Oberflächenfehlern zu prüfende Prüfkörper 2 aufgelegt, wobei der Prüfkörper 2 mittig des ersten und des zweiten Auflagekörpers 31, 32, parallel zu den beiden Auflagekörpern 31, 32 ausgerichtet ist. In dem in Figur 1 gezeigten Ausführungsbeispiel wird ein zylinderförmig ausgebildeter Prüfkörper 2 geprüft. Mit der Prüfvorrichtung können 1 können jedoch auch anders ausgebildete rotationssymmetrische Prüfkörper 2, beispielsweise kugel- oder kegelförmige Prüfkörper 2, geprüft werden.

Die die beiden Auflagekörper 31, 32 aufweisende Halteeinrichtung 34, 34' ist auf einer verfahrbaren Schlitteneinheit 6 vorgesehen. Durch das Aufbringen der Prüfkörperauflage- und -rotationseinheit 3 auf die Schlitteneinheit 6 kann der Prüfkörper 2 im Falle eines von dem 1D- oder 2D-Messsystem 4 detektierten Defektes automatisch von dem 1D- oder 2D-Messsystem 4 zu dem 2½D- oder 3D-Messsystem 5 verfahren werden, ohne dass der Prüfkörper 2 von der Prüfkörperauflage- und -rotationseinheit 3 heruntergenommen und auf einer weiteren Prüfkörperauflage- und -rotationseinheit 3 platziert werden muss. Durch das automatische Verfahren des Prüfkörpers 2 von dem 1D- oder 2D-Messsystem 4 zu dem 2½D- oder 3D-Messsystem 5 kann die Zeit des Prüfprozesses im Vergleich zu dem aus dem Stand der Technik bekannten Prüfverfahren wesentlich verkürzt und damit die Kosten für den Prüfprozess gesenkt werden.

In alternativen Varianten der erfindungsgemäßen Prüfvorrichtung 1 kann die die Halteeinrichtung 34, 34' aufweisende Prüfkörperauflage- und -rotationseinheit 3 derart gelagert sein, dass diese in zwei oder drei Achsrichtungen verfahrbar ist. Dies hat den Vorteil, dass die Prüfkörperauflage- und -rotationseinheit 3 und damit der Prüfkörper 2 besonders genau unter dem 1D- oder 2D-Messsystem 4 bzw. dem 2½D- oder 3D-Messsystem 5 angeordnet werden kann. Ferner können so auch weitere Positionen, beispielsweise Be- und/oder Entladeort, leicht erreicht werden.

Zum automatischen Verfahren der Prüfkörperauflage- und -rotationseinheit 3 von dem 1D- oder 2D-Messsystem 4 zu dem 2½D- oder 3D-Messsystem 5 sind das 1D- oder 2D-Messsystem 4 und die die Prüfkörperauflage- und -rotationseinheit 3 tragende Schlitteneinheit 6 mit der Messstellendatenauswertungseinheit 9 gekoppelt. Bei Detektion eines Defektes des Prüfkörpers 2 durch das 1D- oder 2D-Messsystem 4 wird ein Signal von dem 1D- oder 2D-Messsystem 4 an die Messstellendatenauswertungseinheit 9 übermittelt, um dieser mitzuteilen, dass der Prüfkörper 2 durch das 2½D- oder 3D-Messsystem 5 erfasst werden muss. Sobald das 1D- oder 2D-Messsystem 4 die Prüfung des Prüfkörpers 2 auf Defekte beendet hat oder unmittelbar nachdem ein Defekt detektiert wurde, wird durch die Messstellendatenauswertungseinheit 9 ein Signal an die Schlitteneinheit 6 gegeben, wodurch die Schlitteneinheit 6 die Prüfkörperauflage- und -rotationseinheit 3 zu dem 2½D- oder 3D-Messsystem 5 transportiert.

Vorteilhafterweise wird die Prüfkörperauflage- und -rotationseinheit 3, insofern kein Defekt durch das 1D- oder 2D-Messsystem 4 detektiert wurde, nicht zu dem 2½D- oder 3D-Messsystem 5 verfahren, sondern der Prüfkörper 2 direkt von der Prüfkörperauflage- und -rotationseinheit 3 entfernt und gegebenenfalls ein neuer Prüfkörper 2 auf diese aufgelegt. Der mit der erfindungsgemäßen Prüfvorrichtung 1 durchgeführte Prüfprozess ist damit sehr effizient, zeitsparend, kostengünstig und nachvollziehbar.

Für eine einfache und komplette Erfassung der Oberfläche 21 des Prüfkörpers 2 wird dieser während der Erfassung mit dem 1D- oder 2D-Messsystem 4 wenigstens um 360°, bevorzugt um 370°, um seine Rotationsachse A gedreht. Hierzu ist in dem gezeigten Ausführungsbeispiel der zweite Auflagekörper 32 mit einem Antrieb verbunden, welcher den zweiten Auflagekörper 32 antreibt. Durch die Rotation des zweiten Auflagekörpers 32 um seine Rotationsachse B und den Kontakt des zweiten Auflagekörpers 32 mit dem Prüfkörper 2 wird der Prüfkörper 2 in Bewegung versetzt. Der Prüfkörper 2 rotiert dabei um seine Rotationsachse A. Ferner wird der erste Auflagekörper 31 durch Berührung des Prüfkörpers 2 bei Rotation des Prüfkörpers 2 ebenfalls in Bewegung versetzt, wobei der erste Auflagekörper 31 um seine Rotationsachse C rotiert. Optimalerweise kann durch die Rotation des Prüfkörpers 2 die komplette Oberfläche 21 des Prüfkörpers 2 problemlos von dem 1D- oder 2D-Messsystem 4 hinsichtlich Defekte, wie beispielsweise Riefen, Risse, Abdrücke oder Materialansammlungen, untersucht werden. In alternativen Ausführungsformen der erfindungsgemäßen Prüfvorrichtung 1 können jedoch auch beide Auflagekörper 31, 32 angetrieben werden, wobei diese mit einem gemeinsamen Antrieb oder zwei separat gekoppelten oder ungekoppelten Antrieben angetrieben werden können.

In dem gezeigten Ausführungsbeispiel ist der erste Auflagekörper 31 mit einem Winkellagegeber verbunden, welcher stetig die aktuelle Lage und/oder einen aktuellen Drehwinkel α des auf den Auflagekörpern 31, 32 aufgebrachten Prüfkörpers 2 ermittelt. Anhand der Lage des Prüfkörpers 2 kann die Position eines durch das 1D- oder 2D-Messsystem 4 detektierten Defektes bestimmt werden, wodurch der Defekt bei Erfassung des Prüfkörpers 2 mit dem 2½D- oder 3D-Messsystem 5 schnell und einfach wiederzufinden ist. Hierzu werden ermittelte Positionsdaten von dem Winkellagegeber an die Messstellendatenauswertungseinheit 9 und von dieser an das 2½D- oder 3D-Messsystem 5 übertragen. Bei Defektdetektion wird der Prüfkörper 2 mittels der Schlitteneinheit 6 zu dem 2½D- oder 3D-Messsystem 5 verfahren. Anschließend oder währenddessen wird der Prüfkörper 2 anhand der durch den Winkellagegeber bestimmten Positionsdaten des Defektes mittels des angetriebenen Auflagekörpers 32 so gedreht, dass der Defekt mit dem 2½D- oder 3D-Messsystem 5 erfasst werden kann. Vorteilhafterweise kann der Prüfprozess durch schnelles Auffinden des Defektes und unnötigen Handhabungsprozessen verkürzt und damit die Prüfkosten reduziert werden.

In einer alternativen Ausgestaltungsvariante der erfindungsgemäßen Prüfvorrichtung 1 kann der aktuelle Drehwinkel α des Prüfkörpers 2 auch alternativ oder zusätzlich anhand eines Durchmessers d des Prüfkörpers 2 und einer Drehzahl, welche beispielsweise am Antrieb der zweiten Auflagekörper 32 erfasst werden kann, ermittelt werden. Hierzu wird der Winkel der angetriebenen Auflagekörper 32 überwacht und ausgelesen.

Wie in Figur 1 gezeigt, sind das Portal 7 und die die Prüfkörperauflage- und -rotationseinheit aufweisende Schlitteneinheit 6 auf einem Maschinenbett 70 vorgesehen, sodass die Prüfkörperauflage- und -rotationseinheit 3 und die Messsysteme 4, 5 in einer festen Relation zueinander stehen.

Die Prüfvorrichtung 1 weist ferner eine in dem gezeigten Ausführungsbeispiel als Roboter ausgebildete Prüfkörpersortiervorrichtung 10 auf, mittels welcher Defekte aufweisende Prüfkörper 2 aussortiert, neue Prüfkörper 2 auf die Prüfkörperauflage- und -rotationseinheit 3 aufgelegt und als funktionsfähig geprüfte Prüfkörper 2 zu ihrem Verwendungsort transportiert werden. In alternativen Ausführungsformen der erfindungsgemäßen Prüfvorrichtung 1 kann die Prüfkörpersortiervorrichtung 10 beispielsweise auch als Förderband mit einem Weichen- und/oder Schrankensystem ausgebildet sein. Ebenso könnte aber auch eine Art Stoßvorrichtung als Sortiersystem eingesetzt werden, welche den Prüfkörper 2 entsprechend seines Prüfergebnisses auf ein entsprechendes Förderband oder ähnliches schubst.

Figur 2 zeigt schematisch einen Ausschnitt der in Figur 1 dargestellten erfindungsgemäßen Prüfvorrichtung 1 in einer Vorderansicht von oben, welcher eine Schlitteneinheit 6, einen ersten und einen zweiten Auflagekörper 31, 32 und einen auf den Auflagekörpern 31, 32 aufgebrachten Prüfkörper 2 veranschaulicht. Gleiche Bezugszeichen wie in Figur 1 bezeichnen gleiche Komponenten, weshalb auf die vorherige Beschreibung zu diesen Komponenten verwiesen wird.

Wie in Figur 2 ersichtlich, weisen der erste Auflagekörper 31 und der zweite Auflagekörper 32 jeweils eine in Form von O-Ringen ausgebildete Antirutschbeschichtung 33, 33' auf. In dem Ausführungsbeispiel sind die O-Ringe aus Viton ausgebildet, können in weiteren Ausführungsformen der Prüfvorrichtung 1 jedoch auch aus Gummi oder einem anderen rutschhemmenden Material ausgebildet sein. Um eine gute Auflagefläche für den Prüfkörper 2 auszubilden und eine hohe Reibung zwischen dem Prüfkörper 2 und den beiden Auflagekörpern 31, 32 herzustellen, sind mehrere O-Ringe um jeweils eine Auflagekörper 31, 32 vorgesehen. In alternativen Varianten der Prüfvorrichtung können jedoch auch nur ein oder zwei O-Ringe um jeweils einen Auflagekörper 31, 32 angebracht sein. Anwendungsfallspezifisch können die Abmessungen der O-Ringe variieren. So ist es vorteilhaft, wenn nur wenige O-Ringe vorgesehen werden, die O-Ringe möglichst breit auszugestalten. Ferner kann die Antirutschbeschichtung 33, 33' in weiteren Formen der erfindungsgemäßen Prüfvorrichtung 1 auch die komplette Oberfläche der Auflagekörpern 31, 32 bedecken oder mit einer bestimmten Struktur auf diese aufgebracht sein. Ebenso können die Auflagekörpern 31, 32 auch aus rutschhemmendem Material, wie beispielsweise Gummi, ausgebildet sein.

In dem in Figur 2 gezeigten Ausführungsbeispiel der Prüfvorrichtung 1 sind der erste Auflagekörper 31 und der zweite Auflagekörper 32 identisch ausgestaltet und auf gleicher Höhe in der Prüfvorrichtung 1 angeordnet. Anwendungsfallspezifisch können die Auflagekörper 31, 32 jedoch auch unterschiedlich ausgebildet sein. Ferner können die Auflagekörper 31, 32 auch auf unterschiedlichen Höhen in der Prüfvorrichtung 1 angeordnet sein.

Um Prüfkörper 2 mit unterschiedlichen Abmessungen, insbesondere unterschiedlichen Durchmessern d, mit der erfindungsgemäßen Prüfvorrichtung 1 prüfen zu können, ist ein Abstand D von der ersten Auflagekörper 31 zu der zweiten Auflagekörper 32 einstellbar. Hierfür sind der erste und der zweite Auflagekörper 31, 32 auf einer Führung 35 vorgesehen. Der Abstand D zwischen dem ersten und dem zweiten Auflagekörper 31, 32 wird durch Befehl von der Messstellendatenauswertungseinheit 9 geändert. Der Messstellendatenauswertungseinheit 9 teilt der Nutzer zu Beginn des Prüfprozesses den Durchmesser d des aktuell zu prüfenden Prüfkörpers 2 mit. Ferner kann die Prüfvorrichtung 1 auch eine Messvorrichtung aufweisen, welche zu Beginn eines Prüfprozesses den Durchmesser d des Prüfkörpers 2 ermittelt und diesen Wert der Messstellendatenauswertungseinheit 9 mitteilt, woraufhin die Messstellendatenauswertungseinheit 9 automatisch den Abstand D zwischen den beiden Auflagekörpern 31, 32 anpasst. In weiteren Varianten der Prüfvorrichtung 1 kann der Abstand D auch manuell, beispielsweise durch Betätigen eines Einstellrades, variiert werden.

In dem Ausführungsbeispiel der Prüfvorrichtung 1, welches in Figur 2 gezeigt ist, sind die beiden Auflagekörper 31, 32 durch eine gemeinsame Führung 35 verfahrbar. Ferner kann jedoch, um den Abstand D zwischen den beiden Auflagekörpern 31, 32 zu variieren, auch nur einer der beiden Auflagekörper 31, 32 auf eine Führung aufgebracht sein. Ebenso können der erste und der zweite Auflagekörper 31, 32 auch auf separaten Führungen vorgesehen sein oder die Auflagekörper 31, 32 durch mehrere gemeinsame Führungen geführt werden.

Die in Figur 2 gezeigte Prüfvorrichtung 1 weist ferner eine Wegmesseinrichtung 11 auf, mit welcher der Abstand D zwischen den beiden Auflagekörpern 31, 32 bestimmt werden kann. Anhand eines genau definierten Abstandes D kann zum Beispiel der Prüfkörper 2 besser platziert werden.

Das 1D- oder 2D-Messsystem 4, das 2½D- oder 3D-Messsystem 5, die Messstellendatenauswertungseinheit 9 und die Schlitteneinheit 6 sind so gekoppelt, dass beispielsweise mit nur einem Knopfdruck der Prüfprozess des Prüfkörpers 2 abgewickelt wird und dem Nutzer alle wesentlichen Informationen durch die Messstellendatenauswertungseinheit 9 ausgegeben werden. Ferner kann auch die Prüfkörpersortiervorrichtung 10 mit den oben genannten Komponenten gekoppelt sein, sodass z. B. per Knopfdruck die geprüften Prüfkörper 2 entsprechend des Prüfergebnisses aussortiert werden und der Prüfprozess damit vollautomatisch, zügig und kostengünstig abläuft.

## Patentansprüche

1. Prüfvorrichtung (1) zum Prüfen einer Oberfläche (21) wenigstens eines rotationssymmetrischen Prüfkörpers (2), wobei die Prüfvorrichtung (1)
wenigstens eine Prüfkörperauflage- und -rotationseinheit (3),
ein 1D- oder 2D-Messsystem (4) zum ein- oder zweidimensionalen Erfassen der Oberfläche (21) des Prüfkörpers (2),
ein 2½D- oder 3D-Messsystem (5) zum zweieinhalb- oder dreidimensionalen Erfassen eines Bereiches der Oberfläche (21) des Prüfkörpers (2) und eine Messstellendatenauswertungseinheit aufweist, wobei die Prüfkörperauflage- und -rotationseinheit (3) einen ersten, um seine Rotationsachse (B) drehbaren Auflagekörper (31) und einen zweiten, um seine Rotationsachse (C) drehbaren Auflagekörper (32) aufweist, deren Rotatiosachsen parallel zueinander angeordnet sind oder sich in einem Punkt schneiden, die eine Auflage für den wenigstens einen Prüfkörper (2) ausbilden und durch welche der wenigstens eine Prüfkörper (2) um seine Rotationsachse (A) rotierbar ist,
wenigstens der ersten Auflagekörper (31) ein Winkellagegeber zum Ermitteln eines Drehwinkels (a) des Prüfkörpers (2) auf der Prüfkörperauflage- und -rotationseinheit (3) zugeordnet ist,
wenigstens einer der Auflagekörper (31, 32) mit einem Antriebsmotor verbunden ist, die Prüfkörperauflage- und -rotationseinheit (3) auf einer Schlitteneinheit (6) zum Transportieren des Prüfkörpers (2) von dem 1D- oder 2D-Messsystem (4) zu dem 2½D- oder 3D-Messsystem (5) und zurück verfahrbar ist,
das 1D- oder 2D-Messsystem (4) eine Messstellenerfassungseinrichtung zum Ermitteln von Positionskoordinaten wenigstens einer Messstelle (8) auf dem Prüfkörper (2) aufweist,
das 2½D- oder 3D-Messsystem (5) eine Topographieerfassungseinrichtung aufweist, mit der Topographiedaten der wenigstens einen Messstelle (8) erfassbar sind, und
das 1D- oder 2D-Messsystem (4) und das 2½D- oder 3D-Messsystem (5) mit der Messstellendatenauswertungseinheit (9) verbunden sind.

2. Prüfvorrichtung nach Anspruch 1, **dadurch gekennzeichnet, dass** das 1D- oder 2D-Messsystem (4) ein Bildgebungssystem mit Dunkelfeldbeleuchtung aufweist.

3. Prüfvorrichtung nach wenigstens einem der vorhergehenden Ansprüche, **dadurch gekennzeichnet, dass** das 2½D- oder 3D-Messsystem (5) einen 2½D- oder einen 3D-Topographiesensor aufweist.

4. Prüfvorrichtung nach wenigstens einem der vorhergehenden Ansprüche, **dadurch gekennzeichnet, dass** zur Höhenverstellung eines Objektivs (51) des 2½D- oder 3D-Messsystems (5) eine Positioniereinheit mit dem Objektiv (51) verbunden ist.

5. Prüfvorrichtung nach wenigstens einem der vorhergehenden Ansprüche, **dadurch gekennzeichnet, dass** die Prüfkörperauflage- und -rotationseinheit (3) wenigstens eine Führung zum Verändern eines Abstandes (D) zwischen dem ersten Auflagekörper (31) und dem zweiten Auflagekörper (32) aufweist.

6. Prüfvorrichtung nach wenigstens einem der vorhergehenden Ansprüche, **dadurch gekennzeichnet, dass** die Prüfvorrichtung (1) wenigstens eine Wegmesseinrichtung zum Bestimmen eines Abstandes (D) zwischen dem ersten Auflagekörper (31) und dem zweiten Auflagekörper (32) aufweist.

7. Prüfvorrichtung nach wenigstens einem der vorhergehenden Ansprüche, **dadurch gekennzeichnet, dass** der erste Auflagekörper (31) und/oder der zweite Auflagekörper (32) eine Antirutschbeschichtung oder -oberflächenstruktur aufweist/aufweisen.

8. Prüfvorrichtung nach wenigstens einem der vorhergehenden Ansprüche, **dadurch gekennzeichnet, dass** über dem ersten Auflagekörper (31) und/oder dem zweiten Auflagekörper (32) wenigstens zwei O-Ringe vorgesehen sind.

9. Prüfvorrichtung nach wenigstens einem der vorhergehenden Ansprüche, **dadurch gekennzeichnet, dass** die Prüfvorrichtung (1) eine mit der Messstellendatenauswertungseinheit (9) gekoppelte Prüfkörpersortiervorrichtung (10) aufweist.

10. Prüfvorrichtung nach wenigstens einem der vorhergehenden Ansprüche, **dadurch gekennzeichnet, dass** das 1D- oder 2D-Messsystem (4) und/oder das 2½D- oder 3D-Messsystem (5) an einem über die Prüfkörperauflage- und -rotationseinheit (3) führenden Portal (7) der Prüfvorrichtung (1) angebracht sind.

11. Verfahren zum Prüfen einer Oberfläche (21) wenigstens eines rotationssymmetrischen Prüfkörpers (2), wobei
der Prüfkörper (2) auf eine Prüferköperauflage- und -rotationseinheit (3) aufgebracht und mit dieser um seine Rotationsachse (A) rotiert wird, und
die Oberfläche (21) des Prüfkörpers (2) mit einem 1D- oder 2D-Messsystem (4) ein- oder zweidimensional und anschließend mit einem 2½D- oder 3D-Messsystem (5) zweieinhalb- oder dreidimensional erfasst wird,
wobei der Prüfkörper (2) auf die einen um seine Rotationsachse (B) drehbaren ersten Auflagekörper (31) und einen um seine Rotationsachse (C) drehbaren zweiten Auflagekörper (32) aufweisende Prüfkörperauflage- und -rotationseinheit (3) aufgelegt und zwischen den Auflagekörpern (31, 32) rotiert wird, wobei
wenigstens ein Drehwinkel (α) des Prüfkörpers (2) auf der Prüfkörperauflage- und -rotationseinheit (3) ermittelt wird,
wenigstens einer der Auflagekörper (31, 32) angetrieben wird,
mit einer Messstellenerfassungseinrichtung des 1D- oder 2D-Messsystems (4) Positionskoordinaten wenigstens einer Messstelle (8) auf dem Prüfkörper (2) ermittelt werden,
der Prüfkörper (2) mittels der auf einer Schlitteneinheit (6) vorgesehenen Prüfkörperauflage- und -rotationseinheit (3) von dem 1D- oder 2D-Messsystem (4) zu dem 2½D- oder 3D-Messsystem (5) transportiert wird,
mit einer Topographieerfassungseinrichtung des 2½D- oder 3D-Messsystems (5) Topographiedaten der wenigstens einen Messstelle (8) erfasst werden, und
die von dem 1D- oder 2D-Messsystem (4) und dem 2½D- oder 3D-Messsystem (5) erfassten Daten einer Messstellendatenauswertungseinheit (9) übermittelt und von dieser im Hinblick darauf ausgewertet werden, ob wenigstens ein Defekt und/oder eine Strukturstelle auf der Oberfläche (21) des Prüfkörpers (2) vorhanden ist, der wenigstens einen vorgegebenen Schwellenwert überschreitet.

12. Verfahren nach Anspruch 11, **dadurch gekennzeichnet, dass** die ein- oder zweidimensionale Erfassung des Prüfkörpers (2) mit einem Bildgebungssystem mit Dunkelfeldbeleuchtung vorgenommen wird.

13. Verfahren nach wenigstens einem der Ansprüche 11 oder 12, **dadurch gekennzeichnet, dass** der Prüfkörper (2) mit einem 2½D- oder einem 3D-Topographiesensor dreidimensional erfasst wird.

14. Verfahren nach wenigstens einem der Ansprüche 11 bis 13, **dadurch gekennzeichnet, dass** eine 2½D- oder 3D-Messung des Prüfkörpers (2) durch Höhenverstellung wenigstens eines Objektivs (51) des 2½D- oder 3D-Messsystems (5) erfolgt, wobei in mehreren übereinanderliegenden Ebenen optische Schnitte erzeugt werden, welche durch einen Algorithmus ausgewertet werden.

15. Verfahren nach wenigstens einem der Ansprüche 11 bis 14, **dadurch gekennzeichnet, dass** ein Abstand (D) zwischen dem ersten Auflagekörper (31) und dem zweiten Auflagekörper (32) mit einer Wegmesseinrichtung (11) bestimmt wird.

16. Verfahren nach wenigstens einem der Ansprüche 11 bis 15, **dadurch gekennzeichnet, dass** ein Abstand (D) zwischen dem ersten Auflagekörper (31) und dem zweiten Auflagekörper (32) in Abhängigkeit eines Durchmessers (d) des Prüfkörpers (2) verändert wird.

## Claims

1. Testing device (1) for testing a surface (21) of at least one rotationally symmetrical test piece (2), wherein the testing device (1) comprises at least one test piece support and rotation unit (3),
a 1D or 2D measuring system (4) for the one or two-dimensional detection of the surface (21) of the test piece (2),
a 2½D or 3D measuring system (5) for the two-and-a-half or three-dimensional detection of an area of the surface (21) of the test piece (2) and a measuring point data evaluation unit,
wherein
the test piece support and rotation unit (3) comprises a first support piece (31) rotatable around its rotation axis (B) and a second support piece (32) rotatable around its rotation axis (C), whose rotation axes are arranged parallel to each other or intersect at a point, which form a support for the at least one test piece (2) and by means of which the at least one test piece (2) can be rotated around its rotation axis (A),
an angular position transmitter for determining an angle of rotation (α) of the test piece (2) on the test piece support and rotation unit (3) is at least assigned to the first support piece (31),
at least one of the support pieces (31, 32) is connected to a drive motor,
the test piece support and rotation unit (3) can be displaced on a carriage unit (6) for transporting the test piece (2) from the 1D or 2D measuring system (4) to the 2½D or 3D measuring system (5) and back,
the 1D or 2D measuring system (4) comprises a measuring point detection device for determining positional coordinates of at least one measuring point (8) on the test piece (2),
the 2½D or 3D measuring system (5) comprises a topography detection device by means of which the topography data of the at least one measuring point (8) can be detected, and
the 1D or 2D measuring system (4) and the 2½D or 3D measuring system (5) are connected to the measuring point data evaluation unit (9).

2. Testing device according to claim 1, **characterized in that** the 1D or 2D measuring system (4) comprises an imaging system with dark field illumination.

3. Testing device according to at least one of the preceding claims, **characterized in that** the 2½D or 3D measuring system (5) comprises a 2½D or a 3D topography sensor.

4. Testing device according to at least one of the preceding claims, **characterized in that** for the height adjustment of an objective (51) of the 2½D or 3D measuring system (5), a positioning unit is connected to the objective (51).

5. Testing device according to at least one of the preceding claims, **characterized in that** the test piece support and rotation unit (3) comprises at least one guide for changing a distance (D) between the first support piece (31) and the second support piece (32).

6. Testing device according to at least one of the preceding claims, **characterized in that** the testing device (1) comprises at least one distance measuring device for determining a distance (D) between the first support piece (31) and the second support piece (32).

7. Testing device according to at least one of the preceding claims, **characterized in that** the first support piece (31) and/or the second support piece (32) comprise/s an anti-slip coating or surface structure.

8. Testing device according to at least one of the preceding claims, **characterized in that** at least two O-rings are provided above the first support piece (31) and/or the second support piece (32).

9. Testing device according to at least one of the preceding claims, **characterized in that** the testing device (1) comprises a test piece sorting device (10) coupled with the measuring point data evaluation unit (9).

10. Testing device according to at least one of the preceding claims, **characterized in that** the 1D or 2D measuring system (4) and/or the 2½D or 3D measuring system (5) are attached on a portal (7) of the testing device (1) leading across the testing piece support and rotation unit (3).

11. Method for testing a surface (21) of at least one rotationally symmetrical test piece (2), wherein
the test piece (2) is deposited on a test piece support and rotation unit (3) and is rotated around its rotation axis (A) along with it, and
the surface (21) of the test piece (2) is detected one or two-dimensionally with a 1D or 2D measuring system (4) and subsequently two-and-a-half or three-dimensionally with a 2½D or 3D measuring system (5),
wherein
the test piece (2) is placed on the test piece support and rotation unit (3) comprising a first support piece (31) rotatable around its rotation axis (B) and a second support piece (32) rotatable around its rotation axis (C) and is rotated between the support pieces (31, 32), wherein
at least one rotation angle (α) of the test piece (2) on the test piece support and rotation unit (3) is determined,
at least one of the support pieces (31, 32) is driven,
position coordinates of at least one measuring point (8) on the test piece (2) are determined by means of a measuring point detection unit of the 1D or 2D measuring system (4),
the test piece (2) is transported from the 1D or 2D measuring system (4) to the 2½D or 3D measuring system (5) by means of the test piece support and rotation unit (3) provided on a carriage unit (6),
topography data of the at least one measuring point (8) are detected by means of a topography detection device of the 2½D or 3D measuring system (5), and
the data detected by the 1D or 2D measuring system (4) and the 2½D or 3D measuring system (5) are transmitted to a measuring point data evaluation unit (9) and are evaluated by it with regard to whether there is at least one defect and/or a structure point on the surface (21) of the test piece (2), which exceeds at least one predetermined threshold value.

12. Method according to claim 11, **characterized in that** the one or two-dimensional detection of the test piece (2) is carried out with an imaging system with dark field illumination.

13. Method according to at least one of the claims 11 or 12, **characterized in that** the test piece (2) is recorded three-dimensionally with a 2½D or a 3D topography sensor.

14. Method according to at least one of the claims 11 to 13, **characterized in that** a 2½D or 3D measurement of the test piece (2) by means of adjusting the height of at least one objective (51) of the 2½D or 3D measuring system (5) is carried out, wherein optical cuts are generated in several overlying levels, which are evaluated by means of an algorithm.

15. Method according to at least one of the claims 11 to 14, **characterized in that** a distance (D) between the first support piece (31) and the second support piece (32) is determined by means of a distance measuring device (11).

16. Method according to at least one of the claims 11 to 15, **characterized in that** a distance (D) between the first support piece (31) and the second support piece (32) is changed depending on a diameter (d) of the test piece (2).

## Revendications

1. Dispositif de contrôle (1) pour contrôler une surface (21) d'au moins un corps de contrôle (2) à symétrie rotative, ledit dispositif de contrôle (1) comprenant
au moins une unité de support et de rotation du corps de contrôle (3),
un système de mesure 1D ou 2D (4) pour la détection de la surface (21) du corps de contrôle (2) en une ou en deux dimensions,
un système de mesure 2½D ou 3D (5) pour la détection d'une partie de la surface (21) du corps de contrôle (2) en deux et demi ou en trois dimensions, et
une unité d'évaluation des données de points de mesure,
l'unité de support et de rotation du corps de contrôle (3) comprenant un premier corps de support (31) pouvant tourner autour de son axe de rotation (B) et un deuxième corps de support (32) pouvant tourner autour de son axe de rotation (C), dont les axes de rotation sont arrangés parallèlement l'un par rapport à l'autre ou se convergent en un point, qui forment un support pour ledit au moins un corps de contrôle (2) et au moyen desquels ledit au moins un corps de contrôle (2) peut tourner autour de son axe de rotation (A),
un capteur d'orientation angulaire pour déterminer un angle de rotation (a) du corps de contrôle (2) sur l'unité de support et de rotation du corps de contrôle (3) étant attribué au moins au premier corps de support (31),
au moins l'un des corps de support (31, 32) étant connecté avec un moteur d'entraînement,
l'unité de support et de rotation du corps de contrôle (3) pouvant être déplacée sur une unité chariot (6) pour transporter le corps de contrôle (2) depuis le système de mesure 1D ou 2D (4) vers le système de mesure 2½D ou 3D (5) et retour,
le système de mesure 1D ou 2D (4) comprenant un dispositif de détection de point de mesure pour déterminer les coordonnées de position d'au moins un point de mesure (8) sur le corps de contrôle (2),
le système de mesure 2½D ou 3D (5) comprenant un dispositif de détection de topographie pour déterminer les données topographiques dudit au moins un point de mesure (8), et
le système de mesure 1D ou 2D (4) et le système de mesure 2½D ou 3D (5) étant connectés avec l'unité d'évaluation des données de points de mesure (9).

2. Dispositif de contrôle selon la revendication 1, **caractérisé en ce que** le système de mesure 1D ou 2D (4) comprend un système d'imagerie avec éclairage en fond noir.

3. Dispositif de contrôle selon au moins l'une des revendications précédentes, **caractérisé en ce que** le système de mesure 2½D ou 3D (5) comprend un capteur de topographie 2½D ou 3D.

4. Dispositif de contrôle selon au moins l'une des revendications précédentes, **caractérisé en ce que** pour régler la hauteur d'un objectif (51) du système de mesure 2½D ou 3D (5), une unité de positionnement est connectée à l'objectif (51).

5. Dispositif de contrôle selon au moins l'une des revendications précédentes, **caractérisé en ce que** l'unité de support et de rotation du corps de contrôle (3) présente au moins un guide pour modifier une distance (D) entre le premier corps de support (31) et le deuxième corps de support (32).

6. Dispositif de contrôle selon au moins l'une des revendications précédentes, **caractérisé en ce que** le dispositif de contrôle (1) comprend au moins un dispositif de mesure de distance pour déterminer une distance (D) entre le premier corps de support (31) et le deuxième corps de support (32).

7. Dispositif de contrôle selon au moins l'une des revendications précédentes, **caractérisé en ce que** le premier corps de support (31) et / ou le deuxième corps de support (32) présente / présentent un revêtement ou une structure de surface antidérapant(e).

8. Dispositif de contrôle selon au moins l'une des revendications précédentes, **caractérisé en ce qu'**au moins deux joints toriques sont prévus sur le premier corps de support (31) et / ou le deuxième corps de support (32).

9. Dispositif de contrôle selon au moins l'une des revendications précédentes, **caractérisé en ce que** le dispositif de contrôle (1) comprend un dispositif de triage de corps de contrôle (10) couplé à l'unité d'évaluation des données de points de mesure (9).

10. Dispositif de contrôle selon au moins l'une des revendications précédentes, **caractérisé en ce que** le système de mesure 1D ou 2D (4) et / ou le système de mesure 2½D ou 3D (5) sont montés sur un portail (7) menant sur l'unité de support et de rotation du corps de contrôle (3) du dispositif de contrôle (1).

11. Procédé de contrôle d'une surface (21) d'au moins un corps de contrôle (2) à symétrie rotative,
le corps de contrôle (2) étant mis sur une unité de support et de rotation du corps de contrôle (3) et étant tourné autour de son axe de rotation (A) par celui-ci, et
la surface (21) du corps de contrôle (2) étant détectée en une ou en deux dimensions par un système de mesure 1D ou 2D (4) et ensuite en deux et demi ou en trois dimensions par un système de mesure 2½D ou 3D (5),
le corps de contrôle (2) étant mis sur l'unité de support et de rotation du corps de contrôle (3) comprenant un premier corps de support (31) pouvant tourner autour de son axe de rotation (B) et un deuxième corps de support (32) pouvant tourner autour de son axe de rotation (C), le corps de contrôle (2) étant tourné entre les corps de support (31, 32),
au moins un angle de rotation (a) du corps de contrôle (2) sur l'unité de support et de rotation du corps de contrôle (3) étant déterminé,
au moins l'un desdits corps de support (31, 32) étant entraîné,
des coordonnées de position d'au moins un point de mesure (8) sur le corps de contrôle (2) étant déterminées par un dispositif de détection de point de mesure du système de mesure 1D ou 2D (4),
le corps de contrôle (2) étant transporté depuis le système de mesure 1D ou 2D (4) vers le système de mesure 2½D ou 3D (5) par l'unité de support et de rotation du corps de contrôle (3) étant prévu sur une unité chariot (6),
des données topographiques dudit au moins un point de mesure (8) étant déterminées par un dispositif de détection de topographie du système de mesure 2½D ou 3D (5), et
les données détectées par le système de mesure 1D ou 2D (4) et le système de mesure 2½D ou 3D (5) étant transmises vers une unité d'évaluation des données de points de mesure (9) où ils sont évaluées au regard de s'il y a au moins un défaut et / ou un point de structure sur la surface (21) du corps de contrôle (2) qui dépasse au moins un seuil prédéterminé.

12. Procédé selon la revendication 11, **caractérisé en ce que** la détection du corps de contrôle (2) en une ou deux dimensions est effectuée avec un système d'imagerie avec éclairage en fond noir.

13. Procédé selon au moins l'une des revendications 11 ou 12, **caractérisé en ce que** le corps de contrôle (2) est détecté en trois dimensions avec un capteur de topographie 2½D ou 3D.

14. Procédé selon au moins l'une des revendications 11 à 13, **caractérisé en ce qu'**une mesure 2½D ou 3D du corps de contrôle (2) est effectuée par réglage en hauteur d'au moins un objectif (51) du système de mesure 2½D ou 3D (5), des sections optiques étant générées aux plusieurs plans superposés, lesquelles sont évaluées par un algorithme.

15. Procédé selon au moins l'une des revendications 11 à 14, **caractérisé en ce qu'**une distance (D) entre le premier corps de support (31) et le deuxième corps de support (32) est déterminée par un dispositif de mesure de distance (11).

16. Procédé selon au moins l'une des revendications 11 à 15, **caractérisé en ce qu'**une distance (D) entre le premier corps de support (31) et le deuxième corps de support (32) est modifiée en dépendance d'un diamètre (d) du corps de contrôle (2).
